# EUROPEAN PATENT APPLICATION

(11) **EP 2 535 972 A1**
(43) Date of publication of application: **19.12.2012**
(21) Application number: 11742034.9
(22) Date of filing: 09.02.2011
(51) Int. Cl.: H01M 8/02, H01M 8/10

(54) **CATALYST-COATED MEMBRANE ASSEMBLY MANUFACTURING METHOD AND DEVICE**

(30) Priority: 10.02.2010 JP 2010027554
(71) Applicant: Panasonic Corporation, Kadoma-shi Osaka 571-8501 (JP)
(72) Inventor: MATSUMURA, Jun, Osaka-shi, Osaka 540-6207 (JP); TSUJI, Yoichiro, Osaka-shi, Osaka 540-6207 (JP); NAGAI, Hiroyuki, Osaka-shi, Osaka 540-6207 (JP); SATO, Nobuo, Osaka-shi, Osaka 540-6207 (JP)
(74) Representative: Grünecker, Kinkeldey, Stockmair & Schwanhäusser
(86) International application number: PCT/JP2011/000732
(87) International publication number: WO 2011/099285

(57) **Abstract**

In order to further suppress the occurrence of wrinkles and pinholes in a polymer electrolyte membrane, a manufacturing method for a catalyst-coated membrane assembly according to the present invention includes a preliminary drying process in which a catalyst ink coated onto one surface of the polymer electrolyte membrane is preliminary dried by heating the polymer electrolyte membrane from the side of the other surface so that swelling of the polymer electrolyte membrane is returned to its original state, and a main drying process which is carried out after the preliminary drying process by heating the polymer electrolyte membrane from the side of the one surface.

## Description

### TECHNICAL FIELD

The present invention relates to a manufacturing method and a manufacturing apparatus for a catalyst-coated membrane assembly included in a fuel cell that is used as a driving power supply for, for example, portable electronic apparatuses, vehicles such as automobiles, dispersion generator systems, and domestic cogeneration systems.

### BACKGROUND ART

A fuel cell (for example, a polymer electrolyte-type fuel cell) is a device in which a fuel gas containing hydrogen and an oxidant gas containing oxygen, such as air, are electrochemically reacted with each other so as to simultaneously generate power, heat, and water.

The fuel cell generally has a structure in which a plurality of cells are laminated, and these cells are pressurized and fastened by a fastening member such as a bolt or a band. Each cell is constituted by sandwiching a membrane-electrode-assembly (hereinafter, referred to as MEA) by a pair of plate-shaped conductive separators.

The MEA includes a polymer electrolyte membrane, and a pair of electrode layers disposed on both surfaces of the polymer electrolyte membrane. One of the paired electrode layers is an anode electrode, and the other is a cathode electrode. Each of the paired electrode layers includes a catalyst layer mainly composed of carbon powder on which a metal catalyst is supported, and a gas diffusion layer that is a porous conductive layer to be disposed on the catalyst layer. In this case, the assembly of the polymer electrolyte membrane and the catalyst layer is referred to as a catalyst-coated membrane assembly (CCM assembly). When a fuel gas is made in contact with the anode electrode and an oxidant gas is made in contact with the cathode electrode, an electrochemical reaction occurs to generate power, heat, and water.

In the fuel cell having the structure described above, the catalyst-coated membrane assembly can be manufactured, for example, in the following manner.

First, a first shape-retaining film is bonded to one surface of the polymer electrolyte membrane. Next, a first catalyst layer is formed on the other surface of the polymer electrolyte membrane. Moreover, a second shape-retaining film is bonded onto the first catalyst layer. Next, the first shape-retaining film bonded to one surface of the polymer electrolyte membrane is removed, and a second catalyst layer is formed on this surface. Upon forming the first catalyst layer and the second catalyst layer, a catalyst ink containing a catalyst and a solvent is printed or coated onto the polymer electrolyte membrane, which is left at room temperature to be dried (for example, see Patent Document 1).

The technique in which a catalyst-coated membrane assembly is manufactured by directly printing or coating a catalyst ink onto a polymer electrolyte membrane, as described above, has drawn attentions as an optimal manufacturing method for a catalyst-coated membrane assembly since it is possible to set an interface resistance between the polymer electrolyte membrane and the catalyst layer to an extremely low level.

However, in the conventional manufacturing method, since the polymer electrolyte membrane is extremely thin (for example, 20 µm to 50 µm) and is easily deformed even under a small amount of moisture, the membrane is swelled by the solvent contained in the catalyst ink to cause issues of the occurrence of wrinkles or pinholes in the polymer electrolyte membrane due to the swelling. These wrinkles or pinholes further cause a reduction in the power generating performance of the fuel cell.

The object of Patent Document 1 is to suppress the occurrence of wrinkles and pinholes by preliminarily bonding a shape-retaining film onto a surface, on the side opposite to the surface coated with the catalyst ink, of the polymer electrolyte membrane.

The object of Patent Document 2 is to suppress swelling of the electrolyte-electrode-assembly by preventing suction leakage by the use of a cover so as to improve suction force of a roller with respect to the polymer electrolyte membrane.

Patent document 3 has disclosed a technique in which, by utilizing an air flow from a blower, the solvent is evaporated from the liquid of the coated film so as to accelerate the drying. Also disclosed therein is a technique in which a blower is used to accelerate the drying of the liquid while a circulation mobile body is heated.

### PRIOR ART DOCUMENTS

### PATENT DOCUMENTS

Patent Document 1: Japanese Unexamined Patent Publication No. 2002-289207
Patent Document 2: Japanese Unexamined Patent Publication No. 2008-27738
Patent Document 3: Japanese Unexamined Patent Publication No. 2007-196092

### SUMMARY OF THE INVENTION

### SUBJECT TO BE SOLVED BY THE INVENTION

In the above-mentioned conventional techniques, however, there is still possibility of improvements from the viewpoint of suppressing wrinkles and pinholes of the polymer electrolyte membrane.

In the technique of Patent Document 1, the catalyst ink containing the catalyst and the solvent is printed or coated onto the polymer electrolyte membrane, which is left at room temperature to be dried. In particular, upon forming a second catalyst layer onto one surface of the polymer electrolyte membrane, wrinkles and pinholes tend to be easily generated in the polymer electrolyte membrane, thereby failing to achieve a sufficient effect for suppressing wrinkles and pinholes.

In the technique of Patent Document 2, since the drying of the catalyst ink is carried out by using only an indirect heating by a roller, with the polymer electrolyte membrane being interposed therebetween, it is difficult to sufficiently dry the catalyst ink. Even if the catalyst ink can be completely dried, it is predicted that the drying requires a period of several hours or more. Therefore, completely drying the catalyst ink is impossible from the practical point of view if its production capacity is taken into consideration, and it is not possible to sufficiently suppress the occurrence of wrinkles and pinholes to the polymer electrolyte membrane.

Moreover, the swelling of the polymer electrolyte membrane, which causes wrinkles and pinholes, occurs in particular immediately after the catalyst ink is coated onto the polymer electrolyte membrane. For this reason, in the technique of Patent Document 3 in which the catalyst ink is dried immediately after being coated by blowing an air flow from the side of the coated surface of the catalyst ink, the curing of the catalyst ink is accelerated in the state where the swelling is generated in the polymer electrolyte membrane. Consequently, the technique of Patent Document 3 fails to sufficiently suppress the occurrence of wrinkles and pinholes.

Therefore, an object of the present invention is to solve the above-mentioned issues so as to provide a manufacturing method and a manufacturing apparatus for a membrane-electrode-assembly that can more effectively suppress the occurrence of wrinkles and pinholes in a polymer electrolyte membrane.

### MEANS FOR SOLVING THE SUBJECT

The present inventors have made intensive studies to solve the conventional problems described above, and have found out the following.

Specifically, the present inventors have found that, when a catalyst ink coated onto one surface of a polymer electrolyte membrane is heated from the side of the other surface of the polymer electrolyte membrane (indirectly heated with the polymer electrolyte membrane being interposed in between) to be dried, swelling occurring in the polymer electrolyte membrane can be sufficiently returned to its original state. In other words, when one surface of the polymer electrolyte membrane is coated with the catalyst ink, a change in dimension due to swelling occurs from this one surface inward. The inventors have found that, in this case, when the polymer electrolyte membrane is heated from the side of the other surface so as to dry the catalyst ink, the heat is transmitted inward from the other surface of the polymer electrolyte membrane and the change in dimension due to the swelling of the polymer electrolyte membrane can be reduced. The present inventors have also found that, when the catalyst layer ink is further heated from the side of the one surface of the polymer electrolyte membrane after the swelling has been sufficiently returned to its original state, it is possible to obtain a catalyst-coated membrane assembly having hardly any wrinkles and pinholes in the polymer electrolyte membrane. Based upon these findings, the present inventors have achieved the present invention.

In order to achieve the above-mentioned objects, the present invention has the following arrangements.

According to a first aspect of the present invention, there is provided a manufacturing method for a catalyst-coated membrane assembly for use in a fuel cell, the manufacturing method comprising:
a catalyst coating step of coating a catalyst ink on one surface of a polymer electrolyte membrane;
a first drying step of heating the polymer electrolyte membrane from a side of an other surface of the polymer electrolyte membrane to dry the catalyst ink; and
a second drying step of, after the first drying step, heating the polymer electrolyte membrane from a side of the one surface of the polymer electrolyte membrane to dry the catalyst ink, thereby forming a catalyst layer on the one surface of the polymer electrolyte membrane.

According to a second aspect of the present invention, there is provided the manufacturing method for a catalyst-coated membrane assembly according to the first aspect, wherein the second drying step includes heating the polymer electrolyte membrane from the side of the other surface of the polymer electrolyte membrane to dry the catalyst ink, in addition to heating the polymer electrolyte membrane from the side of the one surface of the polymer electrolyte membrane, to form the catalyst layer on the one surface of the polymer electrolyte membrane.

According to a third aspect of the present invention, there is provided the manufacturing method for a catalyst-coated membrane assembly according to the first or second aspect, the manufacturing method further comprising:
a film bonding step of bonding a shape-retaining film to the other surface of the polymer electrolyte membrane, prior to the catalyst coating step.

According to a fourth aspect of the present invention, there is provided the manufacturing method for a catalyst-coated membrane assembly according to the first aspect, the manufacturing method further comprising:
a second catalyst coating step of, after the second drying step, coating a second catalyst ink on the other surface of the polymer electrolyte membrane;
a third drying step of heating the polymer electrolyte membrane from the side of the one surface of the polymer electrolyte membrane to dry the second catalyst ink; and
a fourth drying step of, after the third drying step, heating the polymer electrolyte membrane from the side of the other surface of the polymer electrolyte membrane to dry the second catalyst ink, thereby forming a second catalyst layer on the other surface of the polymer electrolyte membrane.

According to a fifth aspect of the present invention, there is provided the manufacturing method for a catalyst-coated membrane assembly according to the fourth aspect, wherein the fourth drying step includes heating the polymer electrolyte membrane from the one surface of the polymer electrolyte membrane to dry the second catalyst ink, in addition to heating the polymer electrolyte membrane from the side of the other surface of the polymer electrolyte membrane, to form the second catalyst layer on the other surface of the polymer electrolyte membrane.

According to a sixth aspect of the present invention, there is provided the manufacturing method for a catalyst-coated membrane assembly according to the fourth or fifth aspect, the manufacturing method further comprising:
a first film bonding step of, prior to the first catalyst coating step, bonding a first shape-retaining film to the other surface of the polymer electrolyte membrane;
a second film bonding step of, prior to the second catalyst coating step, bonding a second shape-retaining film to the one surface of the polymer electrolyte membrane; and
a first film separating step of, after the second film bonding step and prior to the second catalyst coating step, separating the first shape-retaining film from the other surface of the polymer electrolyte membrane.

According to a seventh aspect of the present invention, there is provided the manufacturing method for a catalyst-coated membrane assembly according to any one of the first to sixth aspects, wherein a quantity of heat to be applied to the polymer electrolyte membrane in the second drying step is greater than a quantity of heat to be applied to the polymer electrolyte membrane in the first drying step.

According to an eighth aspect of the present invention, there is provided the manufacturing method for a catalyst-coated membrane assembly according to any one of the first to sixth aspects, wherein a temperature of heat to be applied to the polymer electrolyte membrane in the second drying step is higher than a temperature of heat to be applied to the polymer electrolyte membrane in the first drying step.

According to a ninth aspect of the present invention, there is provided a manufacturing apparatus for a catalyst-coated membrane assembly for use in a fuel cell, the manufacturing apparatus comprising:
a transporting device that transports a polymer electrolyte membrane in a transporting direction;
a catalyst coating device that coats a catalyst ink on one surface of the polymer electrolyte membrane;
a first drying device that is installed on a downstream side in the transporting direction of the catalyst coating device, and heats the polymer electrolyte membrane coated with the catalyst ink from a side of other surface of the polymer electrolyte membrane to dry the catalyst ink; and
a second drying device that is installed on a downstream side in the transporting direction of the first drying device, and heats the polymer electrolyte membrane having passed through the first drying device from the side of the one surface of the polymer electrolyte membrane to dry the catalyst ink, thereby forming a catalyst layer on the one surface of the polymer electrolyte membrane.

According to a 10th aspect of the present invention, there is provided the manufacturing apparatus for a catalyst-coated membrane assembly according to the ninth aspect, wherein the second drying device heats the polymer electrolyte membrane having passed through the first drying device from the side of the one surface of the polymer electrolyte membrane, as well as heats the polymer electrolyte membrane from the side of the other surface of the polymer electrolyte membrane, to dry the catalyst ink.

According to an 11th aspect of the present invention, there is provided the manufacturing apparatus for a catalyst-coated membrane assembly according to the ninth or 10th aspect, wherein a quantity of heat to be applied to the polymer electrolyte membrane by the second drying device is greater than a quantity of heat to be applied to the polymer electrolyte membrane by the first drying device.

According to a 12th aspect of the present invention, there is provided the manufacturing apparatus for a catalyst-coated membrane assembly according to the ninth or tenth aspect, wherein a heating temperature of the second drying device is higher than a heating temperature of the first drying device.

### EFFECTS OF THE INVENTION

In the manufacturing method for a catalyst-coated membrane assembly according to the present invention, the catalyst ink that is coated on the one surface of the polymer electrolyte membrane is heated from the side of the other surface of the polymer electrolyte membrane so as to be dried, so that it is possible to sufficiently return the swelling occurred in the polymer electrolyte membrane to its original state.

Moreover, in the manufacturing method for a catalyst-coated membrane assembly according to the present invention, the catalyst ink is dried by heating the one surface of the polymer electrolyte membrane after the first drying process, so that it is possible to obtain a catalyst-coated membrane assembly in which the occurrence of wrinkles and pinholes in the polymer electrolyte membrane is suppressed.

Furthermore, in the manufacturing apparatus for a catalyst-coated membrane assembly according to the present invention, the first drying device is disposed on a downstream side in the transporting direction of the catalyst coating device, so that the catalyst ink having been coated on the one surface of the polymer electrolyte membrane is heated from the side of the other surface of the polymer electrolyte membrane so as to be dried, thereby being possible to sufficiently return the swelling occurred in the polymer electrolyte membrane to its original state.

In the manufacturing apparatus for a catalyst-coated membrane assembly according to the present invention, the second drying device is disposed on a downstream side in the transporting direction of the first drying device, so that the catalyst ink is heated from the side of the one surface of the polymer electrolyte membrane so as to be dried in a state where the swelling occurred in the polymer electrolyte membrane has been sufficiently returned to its original state. With this arrangement, it is possible to obtain a catalyst-coated membrane assembly in which the occurrence of wrinkles and pinholes in the polymer electrolyte membrane is suppressed.

### BRIEF DESCRIPTION OF THE DRAWINGS

These and other objects and features of the invention will become clear from the following description taken in conjunction with the preferred embodiment thereof with reference to the accompanying drawings, in which:
Fig. 1 is a schematic explanatory view that shows a manufacturing apparatus for a catalyst-coated membrane assembly according to an embodiment of the present invention;
Fig. 2 is a cross-sectional view that shows a polymer film having a structure in which a first shape-retaining film is bonded to a second surface of a polymer electrolyte membrane;
Fig. 3 is a cross-sectional view that shows a polymer film having a structure in which, from the state shown in Fig. 2, a first catalyst layer is formed on a first surface of the polymer electrolyte membrane;
Fig. 4 is a cross-sectional view that shows a polymer film having a structure in which, from the state shown in Fig. 3, a second shape-retaining film is further bonded to the first surface of the polymer electrolyte membrane on which the first catalyst layer has been formed;
Fig. 5 is a cross-sectional view that shows a polymer film having a structure in which, from the state shown in Fig. 4, the second shape-retaining film has been separated; and
Fig. 6 is a cross-sectional view that shows a polymer film having a structure in which, from the state shown in Fig. 5, a second catalyst layer is further formed on the second surface of the polymer electrolyte membrane.

### MODE FOR CARRYING OUT THE INVENTION

Before the description of the present invention proceeds, it is to be noted that like parts are designated by like reference symbols throughout the accompanying drawings. Referring to drawings, the following describes an embodiment of the present invention.

### «Embodiment»

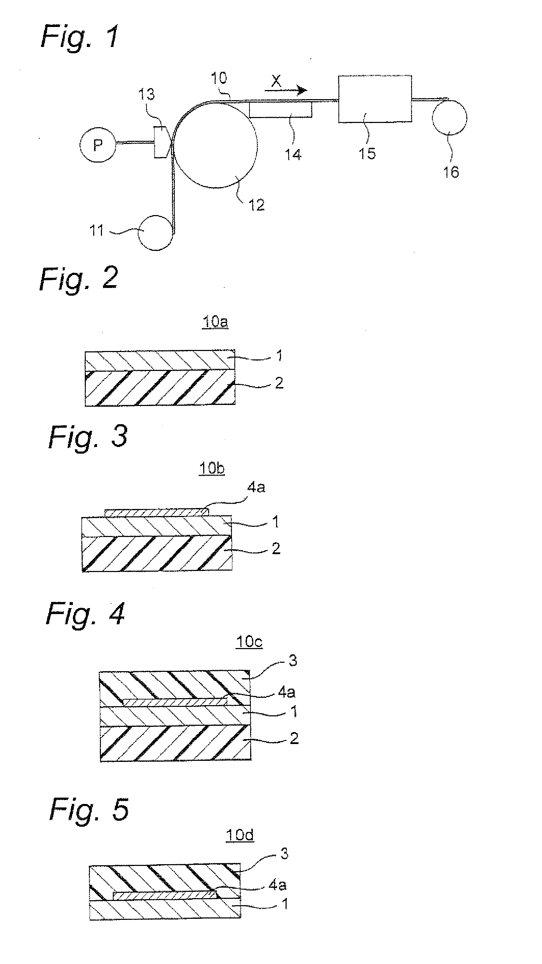

Fig. 1 is a view that shows a schematic structure of a manufacturing apparatus for a catalyst-coated membrane assembly according to an embodiment of the present invention. The catalyst-coated membrane assembly according to the present embodiment is used in a fuel cell that is used in a driving source of, for example, vehicles such as automobiles, dispersion generator systems, and domestic cogeneration systems.

In Fig. 1, the manufacturing apparatus for a catalyst-coated membrane assembly of the present embodiment includes a supply roll 11, a backup roll 12, a die 13, a preliminary drying device 14 serving as one example of a first drying device, a main drying device 15 serving as one example of a second drying device, and a winding roll 16.

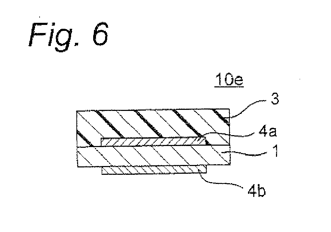

A polymer film 10 is wound around the supply roll 11. In the present embodiment, the polymer film 10 refers to any one of polymer films 10a to 10e each having a structure shown in corresponding one of Figs. 2 to 6. As shown in Fig. 3, in a case where a catalyst layer 4a is formed on a first surface (one surface) of a polymer electrolyte membrane 1, the polymer film 10a having the structure shown in Fig. 2 is wound around the supply roll 11. In other words, the polymer film 10a having the structure in which a first shape-retaining film 2 is bonded to a second surface (the other surface) of the sheet-shaped polymer electrolyte membrane 1 is wound around the supply roll 11. Alternatively, as shown in Fig. 6, in a case where a catalyst layer 4b is formed on the second surface (the one surface) of the polymer electrolyte membrane 1, the polymer film 10d having a structure shown in Fig. 5 is wound around the supply roll 11. In other words, the polymer film 10d having the structure in which a second shape-retaining film 3 is bonded to the first surface (the other surface) of the sheet-shaped polymer electrolyte membrane 1 so as to cover the catalyst layer 4a is wound around the supply roll 11.

Although not particularly limited, as the polymer electrolyte membrane 1, for example, a polymer electrolyte membrane made from perfluorocarbon sulfonic acid (for example, Nafion (registered trademark) made by U.S. DuPont de Nemours and Company, Flemion (registered trademark) made by Asahi Glass Co., Ltd., Aciplex (registered trademark) made by Asahi Kasei Corporation), and the like may be used. The polymer electrolyte membrane 1 is normally a member that is extremely thin, and is easily deformed upon contact with even slight moisture. For this reason, in the present embodiment, the shape-retaining film 2 or 3 is bonded to the first surface or the second surface of the polymer electrolyte membrane 1 so as to improve the handling property and to further suppress wrinkles and pinholes of the polymer electrolyte membrane. The present invention is not limited to this case, and the shape-retaining film 2 or 3 is not necessarily provided.

As the first and second shape-retaining films 2 and 3, materials such as polyethylene terephthalate, polypropylene, polyetherimide, polyimide, fluorine resins, and the like may be used. As the first and second shape-retaining films 2 and 3, any films may be used as long as they have sufficient heat resistance so as not to be thermally deformed upon being subjected to a laminating process.

The polymer film 10 drawn from the supply roll 11 is suspended onto the backup roll 12, and is wound up by the winding roll 16. The winding roll 16 is provided with a motor not shown, and is allowed to continuously rotate by driving power of the motor, so that the polymer film 10 is continuously wound up. In the present embodiment, as will be described later, during a period from the time at which the polymer film 10 is drawn from the supply roll 11 to the time at which it is wound up by the winding roll 16, the catalyst layer 4a (or 4b) is formed on the first surface (or the second surface) of the polymer electrolyte membrane 1, so that mass production of the catalyst-coated membrane assemblies can be carried out. In the present embodiment, one example of a transporting device for transporting the polymer electrolyte membrane 1 in a transporting direction X is constituted by the supply roll 11 and the winding roll 16.

The backup roll 12 is a cylindrical member of which diameter is set to, for example, 300 mm. Since the shape-retaining film 2 or 3 is bonded to the polymer electrolyte membrane 1, the backup roll 12 is not necessarily required to have a suction function.

The die 13 is placed at a position that is opposed to the backup roll 12, with the polymer film 10 being interposed therebetween. A supply pump P is connected to the die 13. The die 13 is designed so as to discharge (coat) a catalyst ink for use in forming a catalyst layer and supplied from the supply pump P, toward a portion of the polymer film 10 to be in contact with the backup roll 12. In the present embodiment, one example of a catalyst coating device for coating the catalyst ink onto the first surface or the second surface of the polymer electrolyte membrane 1 is constituted by the die 13 and the supply pump P.

The catalyst ink is prepared by mixing, into a solvent, carbon fine particles bearing a platinum-based metal catalyst. As the metal catalyst, for example, platinum, ruthenium, rhodium, iridium, and the like may be used. As the carbon powder, for example, carbon black, Ketchen Black, acetylene black and the like may be used. As the solvent, water, alcohol-based organic solvents such as ethanol, n-propanol, n-butanol, and the like, as well as ether-based, ester-based, and fluorine-based organic solvents may be used. By drying the solvent of the platinum-based metal catalyst ink, the first or second catalyst layer 4a or 4b which is mainly composed of carbon powder bearing a metal catalyst, can be formed.

The preliminary drying device 14 is disposed so as to face the second surface (or the first surface) of the polymer film 10 on a downstream side in a transporting direction X of the backup roll 12. The preliminary drying device 14 heats to dry the catalyst ink, which is discharged from die 13 toward the first surface (or the second surface) of the polymer electrolyte membrane 1, from the side of the second surface (or the first surface) of the polymer electrolyte membrane 1. By the drying process of the preliminarily drying device 14, swelling occurred in the polymer electrolyte membrane 1 can be sufficiently returned to its original state. As the preliminary drying device 14, for example, a heating device of an induction-heating system or an electromagnetic wave heating system, a hot plate, a far-infrared heater, and the like may be used.

With respect to the heating temperature of the preliminary drying device 14, too low a temperature fails to achieve sufficient drying, while too high a temperature might cause damages to the polymer electrolyte membrane 1, so that the temperature range is preferably set to, for example, 50°C to 140°C.

From the viewpoint of sufficiently returning the swelling occurred in the polymer electrolyte membrane 1 to its original state, the longer the heating time of the preliminary drying device 14 the better, and the time is preferably set to 30 seconds or more. However, in a case where the polymer film 10 is not intermittently sent but continuously sent, it is necessary to increase the length of the preliminary drying device 14 in order to increase the heating time of the preliminary drying device 14. In this case, the manufacturing apparatus is increase in size. Alternatively, it is also possible to increase the heating time of the preliminary drying device 14 by decreasing the feeding speed of the polymer film 10. In this case, however, the production capacity of the catalyst-coated membrane assembly is lowered. Therefore, by taking these points into consideration, the heating time of the preliminary drying device 14 is desired to be set appropriately.

The main drying device 15 is disposed so as to surround the polymer film 10 on the downstream side in the transporting direction X of the preliminary drying device 14. The main drying device 15 further heats to dry the catalyst ink that has been dried by the preliminary drying device 14 from both sides of the first surface and second surface of the polymer electrolyte membrane 1. By the drying of the main drying device 15, the solvent of the catalyst ink is completely dried, so that the catalyst layer 4a (or 4b) is formed. As the main drying device 15, for example, a convective hot-air drying device may be used.

The heating temperature of the main drying device 15 is preferably set to the same as or higher than the heating temperature of the preliminary drying device 14. With this arrangement, even in a case where the solvent of the catalyst ink is not sufficiently dried by the heating of the preliminary drying device 14, the drying of the solvent of the catalyst ink can be accelerated by the heating of the main drying device 15. Thus, it is possible to further suppress the occurrence of wrinkles and pinholes in the polymer electrolyte membrane. Moreover, it is also possible to shorten the time required for the manufacturing processes, and consequently to improve the production efficiency of the catalyst-coated membrane assembly.

The ratio of the heating temperature of the main drying device 15 relative to the heating temperature of the preliminary drying device 14 is desirably set to 1.0 to 2.0. For example, the heating temperature of the preliminary drying device 14 is preferably set to 50°C to 70°C, and the heating temperature of the main drying device 15 is preferably set to 50°C to 140°C.

Moreover, the main drying device 15, which directly dries the catalyst ink, is superior in drying capability to the preliminary drying device 14 that indirectly heats the catalyst ink with the polymer electrolyte membrane 1 or the like being interposed in between. For this reason, in a case where the heating temperature of the main drying device 15 is the same as or higher than the heating temperature of the preliminary drying device 14, the heating time of the main drying device 15 is preferably set to the same as or longer than the heating time of the preliminary drying device 14. In other words, the quantity of heat of the main drying device 15 is preferably set to the same as or greater than the quantity of heat of the preliminary drying device 14.

The ratio of the quantity of heat of the main drying device 15 relative to the quantity of heat of the preliminary drying device 14 is preferably set to 1.0 to 25.5. Moreover, the ratio of the quantity of heat of the main drying device 15 relative to the quantity of heat of the preliminary drying device 14 is more preferably set to 1.0 to 12.0, and most preferably set to 1.0 to 5.3.

The following describes a manufacturing method for the catalyst-coated membrane assembly according to the present embodiment.

First, the first shape-retaining film 2 is bonded to the second surface of the polymer electrolyte membrane 1 so as to form the polymer film 10a shown in Fig. 2 (first film bonding process).

Next, the polymer film 10a shown in Fig. 2 is wound around the supply roll 11, and the polymer film 10a is suspended on the backup roll 12 so as to be wound up by the winding roll 16 as shown in Fig. 1.

Next, the motor (not shown) of the winding roll 16 is driven so that the polymer film 10a is continuously fed from the supply roll 11 toward the winding roll 16.

Moreover, the catalyst ink is discharged from the supply pump P through the die 13 onto the polymer film 10a positioned on the backup roll 12 by the above-mentioned feeding operation. Then, the first surface of the polymer electrolyte membrane 1 is coated with the catalyst ink (catalyst coating process) .

Next, the polymer film 10a having been coated with the catalyst ink and fed over the preliminary drying device 14 by the above-mentioned feeding operation is heated by the preliminary drying device 14. Thus, the polymer electrolyte membrane 1 is heated from the side of the second surface of the polymer electrolyte membrane 1 so that the catalyst ink is dried, and the swelling of the polymer electrolyte membrane 1 is returned to its original state (first drying process).

Next, the polymer film 10a having been coated with the catalyst ink and fed into the main drying device 15 by the feeding operation is heated by the main drying device 15. Thus, the polymer electrolyte membrane 1 is heated from both sides of the first surface and the second surface of the polymer electrolyte membrane 1 so that the catalyst ink is dried, and as shown in Fig. 3, the catalyst layer 4a is formed (second drying process). Thereafter, by continuously carrying out the feeding operation, the polymer film 10b shown in Fig. 3 is wound up by the winding roll 16.

Next, onto the second surface of the polymer film 10b shown in Fig. 3 and wound up by the winding roll 16, the second shape-retaining film 3 is bonded, as shown in Fig. 4 (second film bonding process).

Thereafter, the first shape-retaining film 2 is separated from the polymer film 10c shown in Fig. 4 so that the polymer film 10d shown in Fig. 5 is formed (first film separation process) .

Next, the polymer film 10d shown in Fig. 5 is wound around the supply roll 11, and, as shown in Fig. 1, the polymer film 10d is set so as to be suspended on the backup roll 12 and wound up by the winding roll 16. In this case, the polymer film 10d is set so that the polymer electrolyte membrane 1 is exposed to the die 13. More specifically, the polymer film 10d is set so as to allow the second surface of the polymer film 10d to face the die 13 and the first surface of the polymer film 10d to face the preliminary drying device 14.

Then, by driving the motor (not shown) of the winding roll 16, the polymer film 10d is continuously fed from the supply roll 11 toward the winding roll 16.

Subsequently, the catalyst ink is discharged from the supply pump P through the die 13 onto the polymer film 10d positioned on the backup roll 12 by the above-mentioned feeding operation. Then, the second surface of the polymer electrolyte membrane 1 is coated with the catalyst ink (second catalyst coating process).

Next, the polymer film 10d having been coated with the catalyst ink and fed over the preliminary drying device 14 by the above-mentioned feeding operation is heated by the preliminary drying device 14. Thus, the polymer electrolyte membrane 1 is heated from the side of the second surface of the polymer electrolyte membrane 1 so that the catalyst ink is dried, and the swelling of the polymer electrolyte membrane 1 is returned to its original state (third drying process).

Next, the polymer film 10d having been coated with the catalyst ink and fed into the main drying device 15 by the feeding operation is heated by the main drying device 15. Thus, the polymer electrolyte membrane 1 is heated from both sides of the first surface and the second surface of the polymer electrolyte membrane 1 so that the catalyst ink is dried, and the catalyst layer 4b is formed as shown in Fig. 6 (fourth drying process). Thereafter, by continuously carrying out the feeding operation, the polymer film 10e shown in Fig. 6 is wound up by the winding roll 16.

Next, by separating the second shape-retaining film 3 from the polymer film 10e shown in Fig. 6, the catalyst-coated membrane assembly according to the present embodiment can be manufactured.

In the manufacturing method for a catalyst-coated membrane assembly according to the present embodiment, since the catalyst ink coated onto the first surface of the polymer electrolyte membrane 1 is heated and dried from the side of the second surface of the polymer electrolyte membrane 1, the swelling occurred in the polymer electrolyte membrane 1 can be sufficiently returned to its original state.

Moreover, in the manufacturing method for a catalyst-coated membrane assembly according to the present invention, after the first drying process, the catalyst ink is dried by heating from both sides of the first surface and second surface of the polymer electrolyte membrane 1, so that it is possible to obtain the catalyst-coated membrane assembly in which the occurrence of wrinkles and pinholes in the polymer electrolyte membrane is suppressed.

Furthermore, in the manufacturing method for a catalyst-coated membrane assembly according to the present invention, as shown in Figs. 2 to 6, since the polymer electrolyte membrane 1 is held on at least one of the first shape-retaining film 2 and the second shape-retaining film 3, it is possible to more effectively suppress the occurrence of wrinkles and pinholes in the polymer electrolyte membrane 1.

In the manufacturing method for a catalyst-coated membrane assembly according to the present invention, since the preliminary drying device 14 is disposed on the downstream side in the transporting direction X of the die 13 that discharges the catalyst ink, the catalyst ink coated onto the first surface of the polymer electrolyte membrane 1 is heated and dried from the side of the second surface of the polymer electrolyte membrane 1, so that the swelling occurred on the polymer electrolyte membrane 1 can be sufficiently returned to its original state.

Furthermore, in the manufacturing method for a catalyst-coated membrane assembly according to the present invention, since the main drying device 15 is disposed on the downstream side in the transporting direction X of the preliminary drying device 14, the catalyst ink can be heated and dried from both sides of the first surface and the second surface of the polymer electrolyte membrane 1, with the swelling occurred in the polymer electrolyte membrane 1 being returned to its original state. Thus, it is possible to obtain the catalyst-coated membrane assembly in which the occurrence of wrinkles and pinholes in the polymer electrolyte membrane is suppressed.

It is noted that the present invention is not intended to be limited by the above-mentioned embodiment, and can be carried out variously in other modes. For example, the device that heats and dries the polymer electrolyte membrane 1 from both sides of the first surface and second surface thereof is used as the main drying device 15 in the above-mentioned embodiment. However, the present invention is not limited to this case. For example, a device that dries only the surface opposite to the surface of the polymer electrolyte membrane 1 to be dried by the preliminary drying device 14 may be used as the main drying device 15. The main drying device 15 may be provided as a heating device of an induction-heating system or an electromagnetic wave heating system, a hot plate, a far-infrared heater, or the like. Even in the case of using such a device, the catalyst ink is directly dried, and therefore the main drying device 15 is allowed to exert the drying capability superior to that of the preliminary drying device 14 that indirectly heats the catalyst ink with the polymer electrolyte membrane 1 or the like being interposed therebetween.

In the above-mentioned embodiment, the preliminary drying device 14 is provided independently. However, the backup roll 12 may have the function of the preliminary drying device 14. In this case, there is no need to provide the preliminary drying device 14. Alternatively, in a case where the backup roll 12 is made to have the heating function and the preliminary drying device 14 is also provided, the swelling of the polymer electrolyte membrane 1 can be returned to its original state more quickly, so that it is possible to reduce the size of the manufacturing apparatus.

The following describes the results of examinations carried out to verify the effects of suppressing wrinkles and pinholes in the polymer electrolyte membrane by the manufacturing method for a catalyst-coated membrane assembly according to the present embodiment. Table 1 below shows variations in thickness of the catalyst layers that are formed with lengths of time required for the preliminary drying process and the main drying process being changed respectively.

**[Table 1]**

| | First Surface | | Second Surface | | | | | |
|---|---|---|---|---|---|---|---|---|
| Preliminary Drying | 60 seconds | 0 seconds | 90 seconds | 40 seconds | 30 seconds | 20 seconds | 10 seconds | 0 seconds |
| Main Drying | 120 seconds | 180 seconds | 90 seconds | 140 seconds | 150 seconds | 160 seconds | 170 seconds | 180 seconds |
| Ratio of Length of Drying Time (Main Drying/Preliminary Drying) | 2.0 | - | 1.0 | 3.5 | 5.0 | 8.0 | 17.0 | - |
| Ratio of Heat Quantities (Main Drying/Preliminary Drying) | 3.0 | - | 1.5 | 5.3 | 7.5 | 12.0 | 25.5 | - |
| Variations in Thickness | ±2.4 µm | ±2.5 µm | ±2.4 µm | ±2.5 µm | ±2.7 µm | ±3.0 µm | ±4.0 µm | ±7.0 µm |

In these examinations, a hot plate was used as the preliminary drying device 14, and a convective hot-air drying device was used as the main drying device 15. The heating temperature of the preliminary drying device 14 was set to 60°C, and the heating temperature of the main drying device 15 was set to 90°C. The total heating time of the preliminary drying device 14 and the main drying device 15 was set to 180 seconds.

Moreover, as the catalyst ink to form the catalyst layer 4a on the first surface of the polymer electrolyte membrane 1, the following ink was used. Specifically, the catalyst ink was prepared such that, after 10 g of ion exchange water was added to 5 g of carbon black having an average particle size of 50 to 60 nm, on which 50% by weight of platinum having an average particle size of 3 nm was supported, added thereto was 10 g of ethanol solution containing 91% by weight of perfluorocarbon sulfonic acid, and the resultant was mixed with ultrasonic vibrations being applied thereto.

As the catalyst ink to form the catalyst layer 4b on the second surface of the polymer electrolyte membrane 1, the following ink was used. Specifically, the catalyst ink was prepared such that, after 15 g of ion exchange water was added to 5 g of carbon black having an average particle size of 50 to 60 nm, on which 50% by weight of an alloy of platinum and ruthenium each having an average particle size of 2 to 3 nm was supported, added thereto was 10 g of ethanol solution containing 91% by weight of perfluorocarbon sulfonic acid, and the resultant was mixed with ultrasonic vibrations being applied thereto.

Moreover, with respect to the variations in thickness of the catalyst layer 4a or 4b, measurements were carried out at 30 points in total, more specifically, 3 points in the width direction by 10 points in the length direction (= 3 x 10).

As apparent from Table 1, with respect to the catalyst layer 4a on the first surface of the polymer electrolyte membrane 1, the variations in thickness of the catalyst layer 4a are substantially the same, irrespective of the presence or absence of the preliminary drying process. This will be because the first shape-retaining film 2 bonded onto the second surface of the polymer electrolyte membrane 1, suppresses wrinkles and pinholes in the polymer electrolyte membrane.

Moreover, Table 1 also indicates that, with respect to the catalyst layer 4b on the second surface of the polymer electrolyte membrane 1, as the length of time of the preliminary drying process is increased, the variations in thickness of the catalyst layer 4b can be suppressed. In particular, in a case where the preliminary drying process is carried out for 30 seconds or more, the effect of suppressing the variations in thickness of the catalyst layer 4b is improved.

Although the present invention is fully described in connection with the preferred embodiment thereof with reference to the accompanying drawings, various changes and modifications will be apparent to those skilled in the art. Such changes and modifications are to be understood as being included within the scope of the present invention as defined by the appended claims unless depart therefrom.

The disclosure of Japanese Patent Application No. 2010-027554 filed on February 10, 2010, including the description, drawings, and claims, are incorporated herein by reference in its entirety.

### INDUSTRIAL APPLICABILITY

The manufacturing method and manufacturing apparatus for a catalyst-coated membrane assembly according to the present invention makes it possible to suppress the occurrence of wrinkles and pinholes in a polymer electrolyte membrane. Therefore, the manufacturing method and the manufacturing apparatus are effectively applicable as a manufacturing method and a manufacturing apparatus for a catalyst-coated membrane assembly to be included in a fuel cell that is used as a driving source for, for example, vehicles such as automobiles, dispersion generator systems, and domestic cogeneration systems.

Description of Reference Symbols
- 1: polymer electrolyte membrane
- 2: first shape-retaining film
- 3: second shape-retaining film
- 4a, 4b: catalyst layer
- 10: polymer film
- 11: supply roll
- 12: backup roll
- 13: die
- 14: preliminary drying device (first drying device)
- 15: main drying device (second drying device)
- 16: winding roll
- P: supply pump

## Claims

1. A manufacturing method for a catalyst-coated membrane assembly for use in a fuel cell, the manufacturing method comprising:
a catalyst coating step of coating a catalyst ink on one surface of a polymer electrolyte membrane;
a first drying step of heating the polymer electrolyte membrane from a side of an other surface of the polymer electrolyte membrane to dry the catalyst ink; and
a second drying step of, after the first drying step, heating the polymer electrolyte membrane from a side of the one surface of the polymer electrolyte membrane to dry the catalyst ink, thereby forming a catalyst layer on the one surface of the polymer electrolyte membrane.

2. The manufacturing method for a catalyst-coated membrane assembly according to claim 1, wherein the second drying step includes heating the polymer electrolyte membrane from the side of the other surface of the polymer electrolyte membrane to dry the catalyst ink, in addition to heating the polymer electrolyte membrane from the side of the one surface of the polymer electrolyte membrane, to form the catalyst layer on the one surface of the polymer electrolyte membrane.

3. The manufacturing method for a catalyst-coated membrane assembly according to claim 1 or 2, the manufacturing method further comprising:
a film bonding step of bonding a shape-retaining film to the other surface of the polymer electrolyte membrane, prior to the catalyst coating step.

4. The manufacturing method for a catalyst-coated membrane assembly according to claim 1, the manufacturing method further comprising:
a second catalyst coating step of, after the second drying step, coating a second catalyst ink on the other surface of the polymer electrolyte membrane;
a third drying step of heating the polymer electrolyte membrane from the side of the one surface of the polymer electrolyte membrane to dry the second catalyst ink; and
a fourth drying step of, after the third drying step, heating the polymer electrolyte membrane from the side of the other surface of the polymer electrolyte membrane to dry the second catalyst ink, thereby forming a second catalyst layer on the other surface of the polymer electrolyte membrane.

5. The manufacturing method for a catalyst-coated membrane assembly according to claim 4, wherein the fourth drying step includes heating the polymer electrolyte membrane from the one surface of the polymer electrolyte membrane to dry the second catalyst ink, in addition to heating the polymer electrolyte membrane from the side of the other surface of the polymer electrolyte membrane, to form the second catalyst layer on the other surface of the polymer electrolyte membrane.

6. The manufacturing method for a catalyst-coated membrane assembly according to claim 4 or 5, the manufacturing method further comprising:
a first film bonding step of, prior to the first catalyst coating step, bonding a first shape-retaining film to the other surface of the polymer electrolyte membrane;
a second film bonding step of, prior to the second catalyst coating step, bonding a second shape-retaining film to the one surface of the polymer electrolyte membrane; and
a first film separating step of, after the second film bonding step and prior to the second catalyst coating step, separating the first shape-retaining film from the other surface of the polymer electrolyte membrane.

7. The manufacturing method for a catalyst-coated membrane assembly according to any one of claims 1 to 6, wherein a quantity of heat to be applied to the polymer electrolyte membrane in the second drying step is greater than a quantity of heat to be applied to the polymer electrolyte membrane in the first drying step.

8. The manufacturing method for a catalyst-coated membrane assembly according to any one of claims 1 to 6, wherein a temperature of heat to be applied to the polymer electrolyte membrane in the second drying step is higher than a temperature of heat to be applied to the polymer electrolyte membrane in the first drying step.

9. A manufacturing apparatus for a catalyst-coated membrane assembly for use in a fuel cell, the manufacturing apparatus comprising:
a transporting device that transports a polymer electrolyte membrane in a transporting direction;
a catalyst coating device that coats a catalyst ink on one surface of the polymer electrolyte membrane;
a first drying device that is installed on a downstream side in the transporting direction of the catalyst coating device, and heats the polymer electrolyte membrane coated with the catalyst ink from a side of other surface of the polymer electrolyte membrane to dry the catalyst ink; and
a second drying device that is installed on a downstream side in the transporting direction of the first drying device, and heats the polymer electrolyte membrane having passed through the first drying device from the side of the one surface of the polymer electrolyte membrane to dry the catalyst ink, thereby forming a catalyst layer on the one surface of the polymer electrolyte membrane.

10. The manufacturing apparatus for a catalyst-coated membrane assembly according to claim 9, wherein the second drying device heats the polymer electrolyte membrane having passed through the first drying device from the side of the one surface of the polymer electrolyte membrane, as well as heats the polymer electrolyte membrane from the side of the other surface of the polymer electrolyte membrane, to dry the catalyst ink.

11. The manufacturing apparatus for a catalyst-coated membrane assembly according to claim 9 or 10, wherein a quantity of heat to be applied to the polymer electrolyte membrane by the second drying device is greater than a quantity of heat to be applied to the polymer electrolyte membrane by the first drying device.

12. The manufacturing apparatus for a catalyst-coated membrane assembly according to claim 9 or 10, wherein a heating temperature of the second drying device is higher than a heating temperature of the first drying device.
